(19) Europäisches Patentamt / European Patent Office / Office européen des brevets

(11) **EP 4 207 380 B1**

(12) **EUROPEAN PATENT SPECIFICATION**

(45) Date of publication and mention
of the grant of the patent:
**13.05.2026 Bulletin 2026/20**

(21) Application number: **21911627.4**

(22) Date of filing: **24.12.2021**

(51) International Patent Classification (IPC):
*C01G 53/00* (2025.01)   *H01M 4/485* (2010.01)
*H01M 10/0525* (2010.01)   *H01M 4/38* (2006.01)
*H01M 4/88* (2006.01)   *H01M 4/02* (2006.01)

(52) Cooperative Patent Classification (CPC):
**H01M 4/1315; H01M 4/366; H01M 4/388;
H01M 4/505; H01M 4/525; H01M 10/0525;**
H01M 2004/028; Y02E 60/10

(86) International application number:
**PCT/KR2021/019895**

(87) International publication number:
**WO 2022/139562 (30.06.2022 Gazette 2022/26)**

(54) **POSITIVE ELECTRODE ACTIVE MATERIAL, POSITIVE ELECTRODE ACTIVE MATERIAL SLURRY, POSITIVEELECTRODE, LITHIUM-ION SECONDARY BATTERY AND METHOD FOR PREPARING POSITIVE ELECTRODE ACTIVEMATERIAL**

AKTIVMATERIAL FÜR POSITIVE ELEKTRODEN, SUSPENSIONEN VON AKTIMATERIAL FÜR POSITIVE ELEKTRODEN, POSITIVE ELEKTRODEN, LITHIUM-IONEN-BATTERIE UND VERAHREN ZUR HESTELLUNG VON AKTIVMATERIAL FÜR POSITIVE ELEKTRODEN

MATÉRIAU ACTIF D'ÉLECTRODE POSITIVE, SUSPENSION DE MATÉRIAU ACTIF D'ÉLECTRODE POSITIVE, ÉLECTRODE POSITIVE, BATTERIE SECONDAIRE LITHIUM-ION ET PROCÉDÉ DE PRÉPARATION DU ACTIF D'ÉLECTRODE POSITIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.12.2020 JP 2020216839**

(43) Date of publication of application:
**05.07.2023 Bulletin 2023/27**

(73) Proprietor: **LG Energy Solution, Ltd.
Seoul 07335 (KR)**

(72) Inventors:
• **CHIHARA, Kuniko**
  **Tokyo 140--0002 (JP)**
• **MATSUBARA, Keiko**
  **Tokyo 140--0002 (JP)**

(74) Representative: **Hoffmann Eitle
Patent- und Rechtsanwälte PartmbB
Arabellastraße 30
81925 München (DE)**

(56) References cited:
**EP-A1- 3 054 507        CN-A- 107 492 636
CN-A- 112 768 662      JP-A- 2020 158 834
KR-A- 20180 071 438    US-A1- 2012 070 725**

EP 4 207 380 B1

**Description**

TECHNICAL FIELD

The present disclosure relates to a positive electrode active material, a positive electrode active material slurry, a positive electrode, a lithium ion secondary battery and a method for preparing a positive electrode active material.

BACKGROUND ART

As technical development and needs for mobile instruments and electric vehicles have been increased, secondary batteries as energy sources have been increasingly in demand. Among such secondary batteries, lithium-ion secondary batteries having high energy density and voltage, long cycle life and low self-discharge rate have been commercialized and used widely. Recently, active studies have been conducted to provide such lithium-ion secondary batteries with high capacity.

KR 2018 0071438 A describes a cathode active material comprising a core formed of a lithium containing metal oxide, and a coating layer which includes lithium iodide.

However, in an attempt to provide a lithium-ion secondary battery with high capacity, there are cases where high-temperature life characteristics (also referred to as cycle characteristics) are not sufficiently realized. Therefore, there is a need for improving such characteristics.

[References]

[Patent Documents]

Patent Document 1: Japanese Laid-Open Patent No. 2017-084673
Patent Document 2: Japanese Laid-Open Patent No. 2009-016302
Patent Document 3: Japanese Laid-Open Patent No. 2017-183101
Patent Document 4: Japanese Laid-Open Patent No. 2018-516458
Patent Document 5: Japanese Laid-Open Patent No. 2013-543219

DISCLOSURE

Technical Problem

The present disclosure is designed to solve the problems of the related art, and therefore the present disclosure is directed to providing a positive electrode active material for a lithium-ion secondary battery having excellent cycle characteristics at high temperature, a positive electrode active material slurry, a positive electrode, a lithium-ion secondary battery, and a method for preparing a positive electrode active material.

Technical Solution

According to the first embodiment of the present disclosure, there is provided a positive electrode active material for a lithium-ion secondary battery, including a lithium transition metal oxide, and an iodine-containing material at least partially covering the particles of the lithium transition metal oxide and containing iodine having an oxidation number of +3 to +7. As used herein, 'lithium transition metal oxide' means a compound containing lithium and a transition metal and having a transition metal-oxygen bonding, and also covers a compound containing a typical metal element, such as aluminum, or a non-metallic element, such as iodine, other than oxygen. In addition, 'iodine-containing material' means an material containing iodine. Further, the term 'covering' means 'at least partially covering the surface of an object', and also includes a chemical bonding to the surfaces of particles and physical covering of the surfaces of particles with no chemical bonding. For example, as determined by X-ray photoelectron spectroscopy (XPS) of the surfaces of active material particles, 'covering' may be determined by the detection of a peak derived from an iodine-containing material.

According to the second embodiment of the present disclosure, there is provided the positive electrode active material for a lithium-ion secondary battery as defined in the first embodiment, wherein the iodine-containing material contains iodine having an oxidation number of +5 to +7.

According to the third embodiment of the present disclosure, there is provided the positive electrode active material for a lithium-ion secondary battery as defined in the first or the second embodiment, wherein the iodine-containing material contains iodine having an oxidation number of +7.

According to the fourth embodiment of the present disclosure, there is provided the positive electrode active material for a lithium-ion secondary battery as defined in any one of the first to the third embodiments, wherein the iodine-containing material contains a periodate ion or a hydrogen periodate ion.

According to the fifth embodiment of the present disclosure, there is provided the positive electrode active material for a lithium-ion secondary battery as defined in any one of the first to the fourth embodiments, wherein the iodine-containing material contains a periodate ion ($IO_4^-$).

According to the sixth embodiment of the present disclosure, there is provided the positive electrode active material for a lithium-ion secondary battery as defined in any one of the first to the fifth embodiments, which shows a spectrum of $I3d_{5/2}$ having a peak at 622-626 eV, as determined by X-ray photoelectron spectroscopy.

According to the seventh embodiment of the present disclosure, there is provided the positive electrode active material for a lithium-ion secondary battery as defined in any one of the first to the sixth embodiments, which includes the iodine-containing material in an amount of 0.001-10.0 wt%.

According to the eighth embodiment of the present disclosure, there is provided a positive electrode active material slurry for a lithium-ion secondary battery including the positive electrode active material as defined in any one of the first to the seventh embodiments.

According to the ninth embodiment of the present disclosure, there is provided a positive electrode for a lithium-ion secondary battery, including a positive electrode active material layer, containing the positive electrode active material as defined in any one of the first to the seventh embodiments and formed on a current collector.

According to the tenth embodiment of the present disclosure, there is provided a lithium-ion secondary battery including the positive electrode as defined in the ninth embodiment.

According to the eleventh embodiment, there is provided a method for preparing the positive electrode active material for a lithium-ion secondary battery as defined in any one of the first to the seventh embodiments, the method including the steps of: mixing a lithium transition metal oxide with an iodine-containing starting material in a solid state to prepare an iodine-containing mixture; and firing the iodine-containing mixture, wherein the firing step comprises firing the iodine-containing mixture at a firing temperature of 150-500°C, and wherein the iodine-containing mixture is maintained at the firing temperature for a firing time of 1-12 hours, in the firing step. As used herein, 'iodine-containing starting material' means a starting material containing iodine, before being fired with a lithium transition metal oxide.

According to the twelfth embodiment, there is provided the method for preparing the positive electrode active material for a lithium-ion secondary battery as defined in the eleventh embodiment, wherein the iodine-containing starting material includes at least one selected from the group consisting of a simple substance of iodine ($I_2$), lithium iodide (LiI), sodium iodide (NaI), potassium iodide (KI), iodoform ($CHI_3$), carbon tetraiodide ($CI_4$), ammonium iodide ($NH_4I$), iodic acid ($HIO_3$), lithium iodate ($LiIO_3$), sodium iodate ($NaIO_3$), potassium iodate ($KIO_3$), ammonium iodate ($NH_4IO_3$), metaperiodic acid ($HIO_4$), orthoperiodic acid ($H_5IO_6$), lithium periodate ($LiIO_4$), sodium periodate ($NaIO_4$), potassium periodate ($KIO_4$), iodine oxide (IV) ($I_2O_4$), iodine oxide (V) ($I_2O_5$) and iodine (IV, V) oxide ($I_4O_9$).

According to the thirteenth embodiment, there is provided the method for preparing the positive electrode active material for a lithium-ion secondary battery as defined in the eleventh or the twelfth embodiment, wherein the iodine-containing starting material includes a simple substance of iodine.

According to the fourteenth embodiment, there is provided the method for preparing the positive electrode active material for a lithium-ion secondary battery as defined in any one of the eleventh to the thirteenth embodiments, wherein the iodine-containing starting material is mixed with the lithium transition metal oxide in an amount of 0.01-5 wt% based on the weight of the lithium transition metal oxide.

According to the fifteenth embodiment, there is provided the method for preparing the positive electrode active material for a lithium-ion secondary battery as defined in any one of the eleventh to the fourteenth embodiments, wherein the firing step is carried out under ambient atmosphere.

Advantageous Effects

According to the present disclosure, it is possible to provide a positive electrode active material for a lithium-ion secondary battery having excellent cycle characteristics at high temperature, a positive electrode active material slurry, a positive electrode, a lithium-ion secondary battery, and a method for preparing a positive electrode active material.

DESCRIPTION OF DRAWINGS

FIG. 1 illustrate a part of the spectrum of the positive electrode active material according to each of Example 1-1 and Comparative Example 1, as determined by X-ray photoelectron spectroscopy (XPS).

FIG. 2 is a graph illustrating a change in battery capacity during the first to the fiftieth charge/discharge cycles in Examples 1-1 to 1-3.

FIG. 3 is a graph illustrating a change in battery capacity during the first to the fiftieth charge/discharge cycles in Examples 2-1 to 2-3.

FIG. 4 is a graph illustrating a change in battery capacity during the first to the fiftieth charge/discharge cycles in Comparative Examples 1 to 3.

FIG. 5 illustrates the XPS spectrum of $I3d_{5/2}$ according to Example 1 and Reference Example 1 in which I (iodine) or $H_5IO_6$ is used as a coating material to carry out coating.

BEST MODE

With reference to the problem of high-temperature life characteristics that may occur when providing a lithium-ion secondary battery with high capacity, a lithium-ion secondary battery using a nickel-enriched lithium transition metal oxide as a positive electrode active material is exemplified in the following description.

In the case of a lithium nickel cobalt manganese ternary positive electrode active material, such as $Li_aNi_{x-}Co_yMn_zO_2$, as a positive electrode material for a lithium-ion secondary battery, it is known that the battery may be provided with high capacity by increasing the nickel content in the composition. In fact, there has been a continuous need for providing a lithium-ion secondary battery with high capacity in the market, and thus active studies have been conducted to develop a Ni-enriched positive electrode active material having a high capacity per unit weight in a range of operating voltage of 3.0~4.2V, instead of conventionally used $LiCoO_2$. However, in the lithium nickel cobalt manganese ternary positive electrode active material, problems, such as generation of gases at high temperature or degradation of stability in a charged state, occur as the content of Ni is increased, which becomes a big obstacle to application to actual batteries.

To solve the above-mentioned problems, Patent Documents 1 and 2 suggest a method for forming an insulating metal oxide, such as alumina or titania, as a protective coating film on the surfaces of positive electrode active material particles so that gas generation may be inhibited or stable cycle behavior may be realized. However, in the case of a Ni-enriched positive electrode, such coating film treatment causes an increase in resistance component, which may result in degradation of discharge capacity or rate characteristics or deterioration of cycle characteristics. Meanwhile, Patent Documents 3 and 4 disclose a method for inhibiting an increase in resistance component caused by a coating film through a sol-gel process, a pulse laser deposition (PLD) process, a chemical vapor deposition (CVD) process, an atomic layer deposition (ALD) process, or the like. However, it is difficult to apply the method to actual batteries in terms of cost or mass production. In addition, Patent Document 5 discloses an attempt to react ammonium halide with an Al source in aqueous solution so that $LiMnO_2$ may be coated with metal halide, such as $AlF_3$, $AlBr_3$ or $AlI_3$. However, the ternary positive electrode active material shows reduced stability against water, as the Ni content is increased. Therefore, when the ternary positive electrode active material is in contact with water, Li is dissolved out to cause significant deterioration of characteristics. Further, use of ammonium halide having high oxidation capability in the state of aqueous solution may cause dissolution of an active material. Therefore, in the currently used or developed active materials, coating technology satisfying cost or characteristics is extremely limited.

The inventors of the present disclosure have found that, in the case of a lithium-ion secondary battery, addition of an iodine-containing material containing iodine having an oxidation number of +3 to +7 to a positive electrode active material including a lithium transition metal oxide, can inhibit deterioration of high-temperature cycle characteristics of the lithium-ion secondary battery. The present disclosure is based on this finding.

[Lithium-Ion Secondary Battery]

The lithium-ion secondary battery according to an embodiment of the present disclosure includes a positive electrode, a negative electrode, a separator interposed between the positive electrode and the negative electrode, and a non-aqueous electrolyte. In addition, the lithium-ion secondary battery may optionally include a battery casing configured to receive an electrode assembly including a positive electrode, a negative electrode and a separator, and a sealing member for sealing the battery casing.

[Positive Electrode]

In the lithium-ion secondary battery according to an embodiment of the present disclosure, the positive electrode includes a positive electrode current collector and a positive electrode active material layer formed on one surface or both surfaces of the positive electrode current collector. The positive electrode active material layer may be formed partially or totally on the surface of the positive electrode current collector. For example, the positive electrode according to an embodiment of the present disclosure is a positive electrode for a lithium-ion secondary battery including an electrolyte.

(Positive Electrode Current Collector)

The positive electrode current collector used for the positive electrode is not particularly limited, as long as it can be used electrochemically stably and has conductivity. For example, the positive electrode current collector may include: stainless steel; aluminum; nickel; titanium; or alloy thereof, or a combination thereof. In addition, the positive electrode current collector may include baked carbon, or aluminum or stainless steel surface-treated with carbon, nickel, titanium, silver, etc., or the like.

The positive electrode may have a thickness of 3-500 $\mu$m. Fine surface irregularities may be formed on the surface of the positive electrode current collector to enhance the adhesion with a positive electrode active material. For example, the positive electrode current collector may have various shapes, such as a film, a sheet, a foil, a net, a porous body, a foam, a nonwoven body, or the like.

(Positive Electrode Active Material Layer)

The positive electrode active material layer may be formed by applying a positive electrode slurry including a mixture of a positive electrode active material, a binder and a conductive material, dissolved or dispersed in a solvent, onto a positive electrode current collector, followed by drying and pressing.

(Positive Electrode Active Material)

The positive electrode active material may include a lithium transition metal oxide capable of reversible lithium intercalation/deintercalation, and the iodine-containing material described hereinafter. For example, the positive electrode active material may include a nickel-containing lithium transition metal oxide, preferably a lithium transition metal oxide having a high nickel content. Herein, 'having a high nickel content' refers to a nickel content of 50 mol% or higher based on the total moles of transition metals. As described above, a nickel-enriched lithium transition metal oxide, such as a lithium transition metal oxide containing 50 mol% or more of nickel, is known to have a problem related with high-temperature cycle characteristics. Therefore, the positive electrode active material according to an embodiment of the present disclosure is used to improve the high-temperature cycle characteristics so that a lithium-ion secondary battery may satisfy both high capacity and high-temperature cycle characteristics. For example, the positive electrode active material may include a lithium transition metal oxide containing nickel in an amount of 60 mol% or more, 70 mol% or more, 80 mol% or more, or 90 mol% or more, based on the total moles of transition metals.

The positive electrode active material may be present in an amount of 80-99.5 wt% based on the total weight of the positive electrode active material layer. Preferably, the positive electrode active material may be present in an amount of 85-98.5 wt% based on the total weight of the positive electrode active material layer. When the content of the positive electrode active material falls within the above-defined range, it is possible to realize excellent capacity characteristics. On the other hand, when the content of the positive electrode active material is less than the above-defined range, the resultant positive electrode shows an increased coating amount and an increased thickness, and thus may not satisfy a sufficient level of volume energy density. When the content of the positive electrode active material is larger than the above-defined range, the amount of a binder and a conductive material is insufficient, thereby providing an electrode with in insufficient conductivity and adhesion, resulting in degradation of battery performance.

(Lithium Transition Metal Oxide)

Particular examples of lithium transition metal oxides include: lithium-manganese oxides (e.g. $LiMnO_2$, $LiMnO_3$, $LiMn_2O_3$, $LiMn_2O_4$, etc.); lithium-cobalt oxides (e.g. $LiCoO_2$, etc.); lithium-nickel oxides (e.g., $LiNiO_2$, etc.); lithium-copper oxides (e.g. $Li_2CuO_2$, etc.); lithium-vanadium oxides (e.g. $LiV_3O_8$, etc.); lithium-nickel-manganese oxides (e.g., $LiNi_{1-z}Mn_zO_2$ (wherein $0 < z < 1$), $LiMn_{2-z}Ni_zO_4$ (wherein $0 < z < 2$)); lithium-nickel-cobalt oxides (e.g., $LiNi_{1-y}Co_yO_2$ (wherein $0 < y < 1$)); lithium-manganese-cobalt oxides (e.g., $LiCo_{1-z}Mn_zO_2$ (wherein $0 < z < 1$), $LiMn_{2-y}Co_yO_4$ (wherein $0 < y < 2$)); lithium-nickel-manganese-cobalt oxides (e.g., $Li(Ni_xCo_yMn_z)O_2$ ($0 < x < 1$, $0 < y < 1$, $0 < z < 1$, $x + y + z = 1$) or $Li(Ni_xCo_yMn_z)O_4$ ($0 < x < 2$, $0 < y < 2$, $0 < z < 2$, $x + y + z = 2$)); lithium-nickel-cobalt-metal (M) oxides (e.g., $Li(Ni_xCo_yMn_zM_w)O_2$ (wherein M is selected from the group consisting of Al, Fe, V, Cr, Ti, Ta, Mg and Mo, and $0 < x < 1$, $0 < y < 1$, $0 < z < 1$, $0 < w < 1$, and $x + y + z + w = 1$)); Li-excess solid solution positive electrode (e.g. $pLi_2MnO_3$-$(1-p)Li(Ni_xCo_yMn_z)O_2$ ($0 < x < 1$, $0 < y < 1$, $0 < z < 1$, $x + y + z = 1$, $0 < p < 1$); those compounds in which the transition metal elements are partially substituted with at least one metal element; or the like. The positive electrode active material layer may include any one compound, or two or more compounds of them. However, the scope of the present disclosure is not limited thereto.

Particularly, examples of nickel-enriched lithium transition metal oxides effective for providing a battery with high capacity include: $Li_aNiO_2$ ($0.5 \leq a \leq 1.5$); $Li_a(Ni_xCo_yMn_z)O_2$ ($0.5 \leq a \leq 1.5$, $0.5 \leq x < 1$, $0 < y < 0.5$, $0 < z < 0.5$, $x + y + z = 1$); $Li_a(Ni_xCo_yMn_z)O_2$ ($0.7 \leq x < 1$, $0 < y < 0.3$, $0 < z < 0.3$, $x + y + z = 1$); $Li_a(Ni_xCo_yMn_z)O_2$ ($0.8 \leq x < 1$, $0 < y < 0.2$, $0 < z < 0.2$, $x + y + z$

= 1); $Li_a(Ni_xCo_yMn_z)O_2$ ($0.9 \leq x < 1$, $0 < y < 0.1$, $0 < z < 0.1$, $x + y + z = 1$); $Li_aNi_{1-y}Co_yO_2$ ($0.5 \leq a \leq 1.5$, $0 < y \leq 0.5$); $Li_aNi_{1-z}Mn_zO_2$ ($0.5 \leq a \leq 1.5$, $0 < z \leq 0.5$); $Li_a(Ni_xCo_yMn_z)O_4$ ($0.5 \leq a \leq 1.5$, $1 \leq x < 2$, $0 < y < 1$, $0 < z < 1$, $x + y + z = 2$); $Li_a(Ni_xCo_yM_w)O_2$ (wherein M is at least one element selected from the group consisting of Al, Fe, V, Cr, Ti, Ta, Mg, Mo, Zr, Zn, Ga and In, $0.5 \leq a \leq 1.5$, $0.5 \leq x < 1$, $0 < y < 0.5$, $0 < w < 0.5$, $x + y + w = 1$); $Li_a(Ni_xCo_yMn_zM_w)O_2$ (wherein M is at least one element selected from the group consisting of Al, Fe, V, Cr, Ti, Ta, Mg, Mo, Zr, Zn, Ga and In, $0.5 \leq a \leq 1.5$, $0.5 \leq x < 1$, $0 < y < 0.5$, $0 < z < 0.5$, $0 < w < 0.5$, $x + y + z + w = 1$); those compounds in which the transition metal elements are partially substituted with at least one metal element (e.g. at least one metal selected from Al, Fe, V, Cr, Ti, Ta, Mg, Mo, Zr, Zn, Ga and In); those compounds in which the oxygen atoms are partially substituted with at least one non-metal element (e.g. at least one element selected from P, F, S and N); or the like. The positive electrode active material layer may include any one compound, or two or more compounds of them. However, the scope of the present disclosure is not limited thereto. In addition, in the same particles, a certain distribution of substitution concentration may be present inside of the particles and on the top layer of the particles. Also, particles having a surface coating layer may be used. For example, the surfaces may be coated with a metal oxide, a lithium transition metal oxide, a polymer, or the like, but the scope of the present disclosure is not limited thereto.

Particularly, with a view to improvement of the capacity characteristics and stability of a battery, preferred are $Li_aNiO_2$, $Li_a(Ni_{0.5}Mn_yCo_z)O_2$ ($y + z = 0.5$), $Li_a(Ni_{0.6}Mn_yCo_z)O_2$ ($y + z = 0.4$), $Li_a(Ni_{0.7}Mn_yCo_z)O_2$ ($y + z = 0.3$), $Li_a(Ni_{0.8}Mn_yCo_z)O_2$ ($y + z = 0.2$), $Li_a(Ni_{0.8}Co_yMn_zAl_w)O_2$ ($y + z + w = 0.2$), $Li_a(Ni_{0.85}Co_yMn_z)O_2$ ($y + z = 0.15$), $Li_a(Ni_{0.85}Co_yMn_zAl_w)O_2$ ($y + z + w = 0.15$), $Li_a(Ni_{0.9}Co_yMn_z)O_2$ ($y + z = 0.1$), $Li_a(Ni_{0.9}Co_yMn_zAl_w)O_2$ ($y + z + w = 0.1$), $Li_a(Ni_{0.9}Co_yMn_z)O_2$ ($y + z = 0.1$), $Li_a(Ni_{0.95}Co_yMn_zAl_w)O_2$ ($y + z + w = 0.05$), or the like. Herein, each 'a' value satisfies $0.5 \leq a \leq 1.5$, preferably $1.0 \leq a \leq 1.5$.

More particularly, preferred are $LiNiO_2$, $Li(Ni_{0.5}Mn_{0.3}Co_{02})O_2$, $Li(Ni_{0.6}Mn_{0.2}Co_{0.2})O_2$, $Li(Ni_{0.7}Mn_{0.15}Co_{0.15})O_2$, $Li(Ni_{0.8}Mn_{0.1}Co_{0.1})O_2$, $Li(Ni_{0.8}Co_{0.15}Al_{0.05})O_2$, $Li(Ni_{0.8}Co_{0.1}Mn_{0.05}Al_{0.05})O_2$, $Li(Ni_{0.85}Co_{0.10}Mn_{0.05})O_2$, $Li(Ni_{0.85}Co_{0.10}Mn_{0.03}Al_{0.02})O_2$, $Li(Ni_{0.9}Co_{0.05}Mn_{0.05})O_2$, $Li(Ni_{0.9}Co_{0.05}Al_{0.05})O_2$, $Li(Ni_{0.95}Co_{0.03}Mn_{0.02})O_2$, $Li(Ni_{0.95}Co_{0.03}Al_{0.02})O_2$, or the like.

(Iodine-Containing Material)

The positive electrode active material according to an embodiment of the present disclosure includes an iodine-containing material in addition to the lithium transition metal oxide. According to an embodiment, the iodine-containing material is obtained by mixing a lithium transition metal oxide with an iodine-containing starting material, followed by firing. In other words, the positive electrode active material obtained by firing includes a lithium transition metal oxide (it is not essentially required that this lithium transition metal oxide is the same material as the lithium transition metal oxide as a starting material before firing), and an iodine-containing material on the lithium transition metal oxide. The iodine-containing material in the positive electrode active material may be present independently from the lithium transition metal oxide particles, but may be at least partially bound chemically or physically to the surfaces of the lithium transition metal oxide particles. It is preferred that the iodine-containing material is at least partially in contact with the lithium transition metal oxide particles. In addition, the iodine-containing material may be at least partially incorporated to the structure of the lithium transition metal oxide. Meanwhile, the iodine-containing material is not limited to an independent compound but may be any chemical species, such as ion, atom, atomic group, or the like.

The content of the iodine-containing material in the positive electrode active material may be 0.001-10.0 wt%, preferably 0.01-1.0 wt%, more preferably 0.02-0.5 wt%, and even more preferably 0.05-0.2 wt%. When the content of the iodine-containing material is 0.001 wt% or more, it is expected that the cycle characteristics or electrical characteristics of a battery is improved.

The iodine-containing starting material is one used for introducing iodine to the positive electrode active material. The iodine-containing starting material is preferably in a solid state at room temperature in terms of simple mixing with the lithium transition metal oxide. Particular examples of the iodine-containing starting material include a simple substance of iodine ($I_2$), lithium iodide (LiI), sodium iodide (NaI), potassium iodide (KI), iodoform ($CHI_3$), carbon tetraiodide ($CI_4$), ammonium iodide ($NH_4I$), iodic acid ($HIO_3$), lithium iodate ($LiIO_3$), sodium iodate ($NaIO_3$), potassium iodate ($KIO_3$), ammonium iodate ($NH_4IO_3$), metaperiodic acid ($HIO_4$), orthoperiodic acid ($H_5IO_6$), lithium periodate ($LiIO_4$), sodium periodate ($NaIO_4$), potassium periodate ($KIO_4$), iodine oxide (IV) ($I_2O_4$), iodine oxide (V) ($I_2O_5$), iodine (IV, V) oxide ($I_4O9$). Any iodine-containing starting material, such as metal iodide or iodine-containing organic compound, other than the above-listed examples may be used, as long as it does not adversely affect the battery characteristics.

After firing, the iodine-containing material in the positive electrode active material includes iodine having an oxidation number of +3 to +7. For example, the iodine-containing material includes iodine having an oxidation number of +5 to +7, preferably +7. Iodine having an oxidation number of +3 to +7 mostly has strong oxidation capability. For example, iodine compounds having an oxidation number of +3 to +7 include iodic acid ($HIO_3$), lithium iodate ($LiIO_3$), sodium iodate ($NaIO_3$), potassium iodate ($KIO_3$), ammonium iodate ($NH_4IO_3$), metaperiodic acid ($HIO_4$), orthoperiodic acid ($H_5IO_6$), lithium periodate ($LiIO_4$), sodium periodate ($NaIO_4$), potassium periodate ($KIO_4$), iodine oxide (IV) ($I_2O_4$), iodine oxide (V)

$(I_2O_5)$, iodine (IV, V) oxide $(I_4O_9)$. The iodine-containing material may include a periodate ion or a hydrogen periodate ion. Particular examples of periodate ion include metaperiodate ion $(IO_4^-)$, orthoperiodate ion $(IO_6^{5-})$, or the like, and particular examples of hydrogen periodate ion include $HIO_6^{4-}$, $H_2IO_6^{3-}$, $H_3IO_6^{2-}$, $H_4IO_6^-$.

The spectrum of the positive electrode active material determined by X-ray photoelectron spectroscopy (XPS) has a peak derived from $I3d_{5/2}$ electrons of the iodine-containing material. When carrying out charge correction with the $-(CH_2)_n-$ derived C1s peak top energy taken as 284.6 eV, the peak position appears at 622-626 eV, preferably 623-625 eV, and more preferably 623.5-624.5 eV. Herein, 'peak position' refers to the position of the maximum of a peak. The peak is derived from iodine having an oxidation number of +3 to +7, preferably iodine having an oxidation number of +5 to +7, and more preferably iodine having an oxidation number of +7.

Preferably, the iodine-containing material at least partially covers the lithium transition metal oxide particles. Preferably, the surfaces of the lithium transition metal oxide particles are at least partially coated with at least a part of the iodine-containing material, and more preferably, at least a part of the iodine-containing material is bound chemically or physically to the surfaces of the lithium transition metal oxide particles. The coating thickness is not particularly limited.

It is thought that the iodine-containing material inhibits deterioration of the cycle characteristics of a battery based on the following mechanism. However, the following description is provided merely for illustrative purposes only, and the scope of the present disclosure is not limited thereto.

It is thought that when the lithium transition metal oxide and iodine-containing starting material are fired, the iodine-containing starting material undergoes chemical reaction to form an iodine-containing material, although details are not clear. Although the function of the iodine-containing material in the positive electrode active material is not clear, the formed iodine-containing material includes iodine having an oxidation number of +3 to +7 and strong electron attraction force. According to the related art, it is known that when mixing a solid electrolyte with LiI, electrons are drawn toward I having high electronegativity to improve Li ion conductivity. From this, it is thought that Li conductivity is improved during charge by the iodine-containing material to accelerate the redox reaction of the positive electrode active material. As a result, it is thought that side reactions, such as electrolyte decomposition, which may occur during charge, are inhibited to suppress an increase in resistance in the positive electrode, resulting in stable long-term cycle characteristics.

It is also thought that the formed iodine-containing material may form a coating film at least partially on the lithium transition metal oxide particles. The coating film inhibits chemical reaction between the positive electrode active material and an electrolyte to inhibit formation of byproducts. Therefore, it is thought that it is possible to inhibit formation of byproducts on the positive electrode active material during repetition of charge/discharge cycles, and thus to inhibit adverse effects, including degradation of battery reactions, an increase in electrical resistance of a battery, and battery swelling caused by gas generation.

As described in the following examples, the above-mentioned function of inhibiting deterioration of battery characteristics is determined at a high temperature of 45-60°C. In other words, according to the above-described embodiment, it is possible to inhibit deterioration of high-temperature cycle characteristics by using the positive electrode active material including the iodine-containing material.

(Binder)

The binder is an ingredient which accelerates binding between an active material and a conductive material and binding to a current collector. Particular examples of the binder include, but are not limited to: polyvinylidene fluoride (PVDF), polyvinyl alcohol (PVA), polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene polymer (EPDM), sulfonated EPDM, styrenebutadiene rubber (SBR), fluoro-rubber, various copolymers thereof, or the like. Such binders may be used alone or in combination.

The content of the binder may be 0.1-30 wt% based on the total weight of the positive electrode active material. The content of the binder may be preferably 0.5-15 wt%, and more preferably 0.5-5 wt%. When the content of the binder polymer satisfies the above-defined range, it is possible to impart sufficient adhesion in the electrode, while preventing degradation of the capacity of a battery.

(Conductive Material)

The conductive material is not particularly limited, as long as it is an electrically conductive material causing no chemical change. Particular examples of the conductive material include, but are not limited to: carbonaceous materials, such as artificial graphite, natural graphite, carbon black, acetylene black, Ketjen black, denka black, thermal black, channel black, furnace black, lamp black, carbon nanotubes, carbon fibers, etc.; metal powder or metal fibers, such as aluminum, tin, bismuth, silicon, antimony, nickel, copper, titanium, vanadium, chrome, manganese, iron, cobalt, zinc, molybdenum, tungsten, silver, gold, lanthanum, ruthenium, platinum, iridium, etc.; conductive whisker, such as zinc oxide or potassium titanate; conductive metal oxide, such as titanium oxide; conductive polymers, such as polyaniline, polythiophene, polyacetylene, polypyrrole, polyphenylene derivatives, etc., or the like. Such conductive materials may be used alone or in combination.

The content of the conductive material may be 0.1-30 wt% based on the total weight of the positive electrode active material layer. The content of the conductive material may be preferably 0.5-15 wt%, more preferably 0.5-5 wt%, based on the total weight of the positive electrode active material layer. When the content of the conductive material satisfies the above-defined range, there are advantages in that sufficient conductivity can be provided, and the amount of the positive electrode active material is not increased, thereby ensuring battery capacity.

(Solvent)

The solvent used for the positive electrode slurry is not particularly limited, as long as it is used conventionally for preparing a positive electrode. Particular examples of the solvent include, but are not limited to: pure water; amine-based solvents, such as N,N-dimethylaminopropylamine, diethylene triamine, N,N-dimethyl formamide (DMF), or the like; ether-based solvents, such as tetrahydrofuran; ketone-based solvents, such as methyl ethyl ketone; ester-based solvents, such as methyl acetate; amide-based solvents, such as dimethyl acetamide, N-methyl-2-pyrrolidone (NMP), or the like; dimethyl sulfoxide (DMSO); water; or the like. Such solvents may be used alone or in combination.

The solvent may be used in such an amount that it allows dissolution or dispersion of the positive electrode active material, the conductive material and the binder therein, and provides a viscosity capable of realizing excellent thickness uniformity upon the application to the positive electrode current collector, considering the slurry coating thickness or production yield.

[Method for Preparing Positive Electrode Active Material]

The method for preparing the positive electrode active material for a lithium-ion secondary battery according to an embodiment of the present disclosure may include the steps of: (1) mixing a lithium transition metal oxide with an iodine-containing starting material in a solid state to prepare an iodine-containing mixture; and (2) firing the iodine-containing mixture, wherein the firing step comprises firing the iodine-containing mixture at a firing temperature of 150-500°C, and wherein the iodine-containing mixture is maintained at the firing temperature for a firing time of 1-12 hours, in the firing step.

(1) Mixing Step

In the mixing step, at least one lithium transition metal oxide is mixed with the above-described iodine-containing starting material in a solid state. The resultant mixture is referred to as 'iodine-containing mixture'. For example, a powdery iodine-containing mixture may be obtained by mixing a powdery lithium transition metal oxide with a powdery iodine-containing starting material. The mixing method is not particularly limited, and any conventional method may be used. The mixing step may be carried out preferably under ambient atmosphere, but the other atmosphere may be used. In addition, any optional ingredients other than the lithium transition metal oxide and iodine-containing starting material may be added. Since the starting materials are mixed in a solid state, the mixing step may be carried out simply, requires low costs and is suitable for mass production.

In the mixing step, the lithium transition metal oxide is added in an amount of 85-99.99 parts by weight based on 100 parts by weight of the total weight of the iodine-containing mixture. The lithium transition metal oxide may be added preferably in an amount of 90-99.9 parts by weight, more preferably 95-99.5 parts by weight. In addition, the iodine-containing starting material may be added in an amount of 0.01-5 parts by weight, preferably 0.1-4 parts by weight, more preferably 0.5-3 parts by weight, and even more preferably 1-3 parts by weight. When the amount of the iodine-containing starting material is 0.01 parts by weight or more, it is expected that the cycle characteristics or electrical characteristics of a battery are improved. When the amount of the iodine-containing starting material is 5 parts by weight or less, it is thought that excessive side reactions are inhibited.

(2) Firing Step

In the firing step, the iodine-containing mixture obtained from the mixing step is fired to obtain a positive electrode active material. The firing step is carried out preferably in the presence of oxygen, and more preferably, under ambient atmosphere. However, the firing step may be carried out under any atmosphere other than the above-mentioned examples. For example, the firing step may be carried out under inert atmosphere, such as nitrogen, argon or noble gas atmosphere. When firing is carried out under ambient atmosphere, the firing step may be carried out simply, requires low costs and is suitable for mass production.

The temperature where the iodine-containing mixture is fired is 150-500°C, preferably 200-450°C, more preferably 250-400°C, and even more preferably 300-350°C. When the firing temperature is 150°C or higher, it is thought that the reaction of the iodine-containing starting material may be accelerated. In addition, when the firing temperature is 500°C or lower, it is thought that excessive formation of byproducts may be inhibited. Further, the firing temperature of the iodine-containing mixture is preferably equal to or higher than the melting point, and more preferably, equal to or higher than the boiling point, of the iodine-containing starting material.

The time during which the iodine-containing mixture is fired is 1-12 hours, preferably 1-9 hours, more preferably 1.5-6 hours, and even more preferably 2-5 hours. When the firing time is 1 hour or more, it is thought that the iodine-containing starting material may be reacted to a desired level. In addition, when the firing time is 12 hours or less, it is possible to reduce the cost by preventing excessively long time of firing.

[Positive Electrode Active Material Slurry and Method for Manufacturing Positive Electrode]

To the positive electrode active material obtained as described above, a conductive material, a binder, or the like, are added. Herein, if necessary, other additives, such as a dispersing agent, a thickener, etc., may be added. The ingredients are dispersed in a solvent to obtain a positive electrode active material slurry. In other words, the positive electrode active material slurry includes the above-described positive electrode active material, conductive material, binder and solvent.

The positive electrode active material slurry is applied to the positive electrode current collector, and then drying and pressing are carried out to obtain a positive electrode including a positive electrode active material layer formed on the positive electrode current collector.

In a variant, the positive electrode slurry may be cast onto another support, and the film obtained by peeling it from the support may be laminated on the positive electrode current collector to obtain a positive electrode. In addition, any optional method other than the above-mentioned methods may be used to form a positive electrode active material layer on the positive electrode current collector.

[Negative Electrode]

In the lithium-ion secondary battery according to an embodiment of the present disclosure, the negative electrode includes a negative electrode current collector, and a negative electrode active material layer formed on one surface or both surfaces of the negative electrode current collector. The negative electrode active material layer may be formed partially or totally on the surface of the negative electrode current collector.

(Negative Electrode Current Collector)

The negative electrode current collector used for the negative electrode is not particularly limited, as long as it is electrochemically stable and has conductivity. Particular examples of the negative electrode current collector include: copper; stainless steel; aluminum; nickel; titanium; baked carbon; copper or stainless steel surface-treated with carbon, nickel, titanium, silver, etc.; aluminum-cadmium alloy, or the like.

The negative electrode may have a thickness of 3-500 $\mu$m. Fine surface irregularities may be formed on the surface of the negative electrode current collector to enhance the adhesion with a negative electrode active material. For example, the negative electrode current collector may have various shapes, such as a film, a sheet, a foil, a net, a porous body, a foam, a nonwoven body, or the like.

(Negative Electrode Active Material Layer)

For example, the negative electrode active material layer may be formed by applying a negative electrode slurry including a mixture of a negative electrode active material, a binder and a conductive material, dissolved or dispersed in a solvent, onto a negative electrode current collector, followed by drying and pressing. The mixture may further include a dispersing agent, a filler, or other optional additives, if necessary.

(Negative Electrode Active Material)

The negative electrode active material may include a compound capable of reversible lithium-ion intercalation/deintercalation. Particular examples of the negative electrode active material include, but are not limited to: carbonaceous materials, such as artificial graphite, natural graphite, graphitized carbon fibers and amorphous carbon; silicon-based materials, such as silicon powder, amorphous silicon, silicon nanofibers and silicon nanowires; silicon compounds, such as silicon alloys, silicon oxides, and alkali metal- or alkaline earth metal-doped silicon oxides; metallic materials capable of alloying with lithium, such as Al, Sn, Pb, Zn, Bi, In, Mg, Ga, Cd, Sn alloys, Al alloys, or the like; metal oxides capable of lithium doping/dedoping, such as $SnO_2$, vanadium oxides and lithium vanadium oxides; composites of a silicon-based material with a carbonaceous material or other composites, such as Sn-C composite; or the like. Such negative electrode active materials may be used alone or in combination. Meanwhile, the carbonaceous materials may include low-crystallinity carbon or high-crystallinity carbon. Low-crystallinity carbon include soft carbon and hard carbon. High-crystallinity carbon include amorphous, sheet-like, flake-like, spherical or fibrous natural graphite or artificial graphite, kish graphite, pyrolyzed carbon, mesophase pitch-based carbon fibers, mesocarbon microbeads, mesophase pitch, high temperature-fired carbon, such as petroleum/coal-based cokes.

The negative electrode active material may be used in an amount of 80-99 wt% based on the total weight of the negative electrode active material layer.

(Binder and Conductive Material)

The types and contents of the binder and the conductive material used for the negative electrode slurry may be the same as described above with reference to the positive electrode.

(Solvent)

The solvent used for negative electrode slurry is not particularly limited, as long as it is used conventionally for manufacturing a negative electrode. Particular examples of the solvent include, but are not limited to: N-methyl-2-pyrrolidone (NMP), dimethyl sulfoxide (DMSO), isopropyl alcohol, acetone, water, or the like. Such solvents may be used alone or in combination.

[Method for Manufacturing Negative Electrode]

The method for manufacturing the negative electrode for a lithium-ion secondary battery according to an embodiment of the present disclosure may include the steps of: dissolving or dispersing a negative electrode active material optionally with a binder, a conductive material, or the like, in a solvent to obtain a negative electrode slurry; and forming a negative electrode active material layer on a negative electrode current collector, for example, by applying the negative electrode slurry to a negative electrode current collector to obtain a negative electrode, similarly to the method for manufacturing a positive electrode.

[Separator]

In the lithium-ion secondary battery according to an embodiment of the present disclosure, the separator functions to separate the negative electrode and the positive electrode from each other and to provide a lithium-ion transport channel. Any separator may be used with no particular limitation, as long as it is used conventionally as a separator for a lithium-ion secondary battery. Particularly, the separator preferably shows low resistance against electrolyte ion migration and high wettability with an electrolyte. Particular examples of the separator may include a porous polymer film, such as a porous polymer film made of a polyolefin-based polymer, including ethylene homopolymer, propylene homopolymer, ethylene/butene copolymer, ethylene/hexene copolymer or ethylene/methacrylate copolymer, or a laminate having two or more layers of such porous polymer films. In addition, a conventional porous non-woven web, such as a non-woven web made of high-melting point glass fibers, polyethylene terephthalate fibers, or the like, may be used. Further, a separator coated with a ceramic ingredient or polymer material in order to ensure heat resistance or mechanical strength may be used.

[Non-Aqueous Electrolyte]

In the lithium-ion secondary battery according to an embodiment of the present disclosure, the non-aqueous electrolyte may include an organic liquid electrolyte, an inorganic liquid electrolyte, or the like, which may be used for manufacturing a lithium-ion secondary battery, but is not limited thereto.

The non-aqueous electrolyte may include an organic solvent and a lithium salt, and may further include additives, if necessary. Hereinafter, the liquid electrolyte is also referred to as 'electrolyte'.

The organic solvent is not particularly limited, as long as it can function as a medium through which ions participating in the electrochemical reactions of a battery can be transported. Particular examples of the organic solvent include, but are not limited to: ester-based solvents, such as methyl acetate, ethyl acetate, $\gamma$-butyrolactone and $\varepsilon$-caprolactone; ether-based solvents, such as dibutyl ether and tetrahydrofuran; ketone-based solvents, such as cyclohexanone; aromatic hydrocarbon-based solvents, such as benzene and fluorobenzene; carbonate-based solvents, such as dimethyl carbonate (DMC), diethyl carbonate (DEC), ethyl methyl carbonate (EMC), ethylene carbonate (EC) and propylene carbonate (PC); alcohol-based solvents, such as ethyl alcohol and isopropyl alcohol; nitrile-based solvents, such as R-CN (wherein R is a C2-C20 linear, branched or cyclic hydrocarbon group, which may optionally include a double bond, an aromatic ring or ether bond); amide-based solvents, such as dimethyl formamide; dioxolane-based solvents, such as 1,3-dioxolan; sulforane-based solvents, or the like. Such solvents may be used alone or in combination. Particularly, carbonate-based solvents are preferred. In addition, more preferred is a mixture capable of enhancing the charge/discharge characteristics of a battery, wherein the mixture includes a cyclic carbonate (e.g. ethylene carbonate or propylene carbonate) having high ion conductivity and high dielectric constant and a low-viscosity linear carbonate-based compound (e.g. ethyl methyl carbonate, dimethyl carbonate or diethyl carbonate). In this case, when mixing the cyclic carbonate with the linear carbonate at a volume ratio of about 1:1-1:9, it is possible to realize excellent electrolyte quality.

The lithium salt is not particularly limited, as long as it is a compound capable of providing lithium ions used in a lithium-ion secondary battery. Particular examples of the lithium salt include, but are not limited to: $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like. Such lithium salts may be used alone or in combination. For example, the lithium salt may be present in the electrolyte at a concentration of 0.1-2 mol/L. When the concentration of the lithium salt falls within the above-defined range, the electrolyte has suitable conductivity and viscosity and shows excellent electrolyte quality, and thus lithium ions can be transported effectively.

Additives may be used optionally in order to improve the life characteristics of a battery, to inhibit degradation of the capacity of a battery and to improve the discharge capacity of a battery. Particular examples of the additives include, but are not limited to: haloalkylene carbonate-based compounds, such as fluoroethylene carbonate (FEC) and difluoroethylene carbonate (DFEC); pyridine; triethyl phosphite; triethanolamine; cyclic ethers; ethylene diamine; n-glyme; triamide hexamethylphosphate; nitrobenzene derivatives; sulfur; quinonimine dyes; N-substituted oxazolidinone; N,N-substituted imidazolidine; ethylene glycol diallyl ether; ammonium salts; pyrrole; 2-methoxyethanol; aluminum trichloride, or the like. Such additives may be used alone or in combination. The additives may be used in an amount of 0.1-15 wt% based on the total weight of the electrolyte.

[Method for Manufacturing Lithium-Ion Secondary Battery]

The lithium-ion secondary battery according to an embodiment of the present disclosure may be obtained by interposing the separator and electrolyte between the positive electrode and the negative electrode obtained as described above. Particularly, the non-aqueous electrolyte secondary battery may be obtained by forming an electrode assembly by disposing the separator between the positive electrode and the negative electrode, introducing the electrode assembly to a battery casing, such as a cylindrical battery casing or prismatic battery casing, injecting the electrolyte thereto, and sealing the battery casing.

The battery casing may be any one used conventionally in the art. For example, the shape of the battery casing may include a cylindrical shape using a can, a prismatic shape, a pouch-like shape or a coin-like shape.

The lithium-ion secondary battery according to an embodiment of the present disclosure may be used not only as a power source for a compact device but also as a unit cell of a medium- to large-size battery module including a plurality of battery cells. Preferred examples of such medium- to large-size devices include electric vehicles, hybrid electric vehicles, plug-in hybrid electric vehicles, power storage systems, or the like, but are not limited thereto.

<Examples>

Hereinafter, the present disclosure will be explained in more detail with reference to examples and comparative examples.

[Example 1-1]

(Manufacture of Positive Electrode)

First, 1.0 parts by weight of iodine simple substance powder ($I_2$, available from Wakou Pharmaceuticals) was added to and mixed with 100 parts by weight of $LiNi_{0.90}Co_{0.07}Mn_{0.03}O_2$ (also referred to as 'lithium transition metal oxide', hereinafter), the resultant mixture was sealed in a 100 mL plastic bottle, and the plastic bottle was shaken up and down in one's hand for about 1 minute to mix the ingredients, thereby preparing an iodine-containing mixture. The iodine-containing mixture was warmed to 300°C under ambient atmosphere, allowed to stand at 300°C for 2 hours to perform firing, and then was cooled to room temperature to obtain a positive electrode active material. Then, 1.5 parts by weight of carbon black as a conductive material and 2.0 parts by weight of polyvinylidene fluoride (PVDF) as a binder were added to and mixed with 96.5 parts by weight of the positive electrode active material together with N-methyl-2-pyrrolidone (NMP) as a solvent to obtain a positive electrode active material slurry.

After that, the resultant positive electrode active material slurry was applied to aluminum foil having a thickness of 20 μm to a thickness of about 70 μm and dried at 130°C to obtain a positive electrode sheet.

(Preparation of Electrolyte)

Ethylene carbonate, dimethyl carbonate and diethyl carbonate were mixed at a volume ratio of 1:2:1, and 2.0 wt% of vinylene carbonate (VC) was added thereto, while $LiPF_6$ was dissolved therein at a concentration of 1 mol/L, thereby preparing an electrolyte.

(Manufacture of Coin-Cell Battery)

The positive electrode sheet obtained as described above was punched into a circular shape to prepare a positive electrode. Lithium metal having a thickness of 0.3 mm was used as a negative electrode, and the electrolyte prepared as described above was used to obtain a CR2016 type coin-cell battery.

(Manufacture of Mono-Cell Battery)

Separately from the coin-cell, the positive electrode sheet obtained as described about was punched into an angular shape and used as a positive electrode, graphite with the corresponding size was used as a negative electrode, and the electrolyte prepared as described above was used to obtain a mono-cell battery.

[Example 1-2]

A positive electrode, a coin-cell battery and a mono-cell battery were obtained in the same manner as Example 1-1, except that 2.0 parts by weight of iodine was added.

[Example 1-3]

A positive electrode, a coin-cell battery and a mono-cell battery were obtained in the same manner as Example 1-1, except that 3.0 parts by weight of iodine was added.

[Example 2-1]

A positive electrode, a coin-cell battery and a mono-cell battery were obtained in the same manner as Example 1-1, except that the iodine-containing mixture was fired at a temperature of 350°C for 5 hours.

[Example 2-2]

A positive electrode, a coin-cell battery and a mono-cell battery were obtained in the same manner as Example 2-1, except that 2.0 parts by weight of iodine was added.

[Example 2-3]

A positive electrode, a coin-cell battery and a mono-cell battery were obtained in the same manner as Example 2-1, except that 3.0 parts by weight of iodine was added.

[Example 3-1]

A positive electrode, a coin-cell battery and a mono-cell battery were obtained in the same manner as Example 1-1, except that the iodine-containing mixture was fired at a temperature of 400°C for 2 hours.

[Example 3-2]

A positive electrode, a coin-cell battery and a mono-cell battery were obtained in the same manner as Example 1-1, except that the iodine-containing mixture was fired at a temperature of 400°C for 5 hours.

[Example 4-1]

A positive electrode, a coin-cell battery and a mono-cell battery were obtained in the same manner as Example 1-1, except that the iodine-containing mixture was fired at a temperature of 450°C for 2 hours.

[Example 4-2]

A positive electrode, a coin-cell battery and a mono-cell battery were obtained in the same manner as Example 1-1, except that the iodine-containing mixture was fired at a temperature of 450°C for 5 hours.

[Comparative Example 1]

A positive electrode, a coin-cell battery and a mono-cell battery were obtained in the same manner as Example 1-1, except that no iodine was added, firing was not preformed, and the lithium transition metal oxide powder of the starting material was used, as it was, as a positive electrode active material.

[Comparative Example 2]

A positive electrode, a coin-cell battery and a mono-cell battery were obtained in the same manner as Example 1-1, except that no iodine was added, and the product obtained by firing the lithium transition metal oxide powder of the starting material at 300°C for 2 hours was used as a positive electrode active material.

[Comparative Example 3]

A positive electrode, a coin-cell battery and a mono-cell battery were obtained in the same manner as Comparative Example 2, except that the mixture was fired at a temperature of 350°C for 5 hours.

The conditions used in each of Examples and Comparative Examples are shown in the following Table 1.

[Table 1]

| | Positive electrode active material (wt%) | | Firing temperature (°C) | Firing time (h) | Slurry (wt%) | | |
|---|---|---|---|---|---|---|---|
| | Lithium transition metal oxide | Iodine $I_2$ | | | Positive electrode active material | Conductive material | Binder |
| Ex. 1-1 | 100 | 1.0 | 300 | 2 | 96.5 | 1.5. | 2.0 |
| Ex. 1-2 | 100 | 2.0 | 300 | 2 | 96.5 | 1.5 | 2.0 |
| Ex. 1-3 | 100 | 3.0 | 300 | 2 | 96.5 | 1.5. | 2.0 |
| Ex. 2-1 | 100 | 1.0 | 350 | 5 | 96.5 | 1.5 | 2.0 |
| Ex. 2-2 | 100 | 2.0 | 350 | 5 | 96.5 | 1.5. | 2.0 |
| Ex. 2-3 | 100 | 3.0 | 350 | 5 | 96.5 | 1.5 | 2.0 |
| Ex. 3-1 | 100 | 1.0 | 400 | 2 | 96.5 | 1.5. | 2.0 |
| Ex. 3-2 | 100 | 1.0 | 400 | 5 | 96.5 | 1.5 | 2.0 |
| Ex. 4-1 | 100 | 1.0 | 450 | 2 | 96.5 | 1.5. | 2.0 |
| Ex. 4-2 | 100 | 1.0 | 450 | 5 | 96.5 | 1.5 | 2.0 |
| Comp. Ex. 1 | 100 | 0 | No firing | | 96.5 | 1.5. | 2.0 |
| Comp. Ex. 2 | 100 | 0 | 300 | 2 | 96.5 | 1.5. | 2.0 |
| Comp. Ex. 3 | 100 | 0 | 350 | 5 | 96.5 | 1.5 | 2.0 |

[Test Example 1: X-ray Photoelectron Spectroscopy (XPS) Analysis of Positive Electrode Active Material]

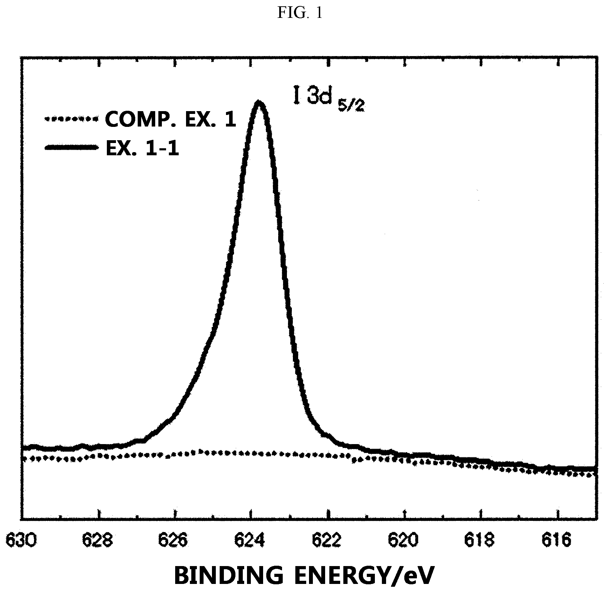

Each of the positive electrode active materials obtained according to Example 1-1 and Comparative Example 1-1 was analyzed by X-ray photoelectron spectroscopy (XPS). The sample to be analyzed is a solid-state positive electrode active material obtained after firing and before preparing a positive electrode active material slurry. Charge correction was carried out with the $-(CH_2)_n-$ derived C1s peak top energy taken as 284.6 eV. FIG. 1 illustrates a part of the XPS spectrum of Example 1-1 (solid line) and that of Comparative Example 1 (dotted line). In the case of the positive electrode active material according to Example 1-1, the iodine $3d_{5/2}$ electron-derived peak having a peak top at around 624V is observed in a range of 622-626 eV, while no peak is observed in the case of the positive electrode active material according to Comparative Example 1. Since the peak position substantially coincides with sodium periodate ($NaIO_4$) containing iodine having an oxidation number of +7, it is thought that iodine in the positive electrode active material is present at least partially in the form of periodate ion. Meanwhile, in the case of Example 1-1, no peak derived from iodine having an oxidation number of 0 or -1 is observed in a range of 618-620 eV.

[Test Example 2: Elemental Analysis of Positive Electrode Active Material Based on X-ray Fluorescence Spectrometry]

The positive electrode active material obtained from each of Examples and Comparative Examples was subjected to elemental analysis based on X-ray fluorescence spectrometry (XRF). The XRF instrument is a scanning type X-ray fluorescence spectrometer (ZSX Primus II (available from Rigaku)). The sample to be analyzed by XRF is a solid-state positive electrode active material before preparing a positive electrode active material slurry. The value obtained from Comparative Example 1-1, not subjected to coating treatment, is taken as a baseline, and the value obtained by subtracting the baseline from the measurement of each of Examples 1-1, 2-1, 3-1 and 4-1 is defined as the iodine content of each sample. The results are shown in the following Table 2.

[Table 2]

|  | Iodine content |
| --- | --- |
| Example 1-1 | 0.034 wt% |
| Example 2-1 | 0.073 wt% |
| Example 3-1 | 0.112 wt% |
| Example 4-1 | 0.189 wt% |

[Test Example 3: Capacity Retention (30th cycle) at High Temperature]

The coin-cell battery obtained according to each of Examples and Comparative Example 1 was subjected to 30 charge/discharge cycles repeatedly in a thermostat maintained at 45°C under the conditions of a charge cutoff voltage of 4.25 V, discharge cutoff voltage of 2.50 V, charge current rate of 0.3 C and a discharge current rate of 0.3 C. In general, the capacity retention after repeating n times of charge/discharge cycles is defined according to the following Mathematical Formula 1:

Capacity retention (%) = (Discharge capacity at the $n^{th}$ charge/discharge cycle)/ (Discharge capacity at the first charge/discharge cycle) X 100 [Mathematical Formula 1]

The capacity retention (45°C) at the 30th cycle is shown in the following Table 3. Comparative Example 1 shows the largest deterioration in battery capacity, while Example 1 shows the smallest deterioration in battery capacity.

[Table 3]

|  | Capacity Retention (30th cycle, 45°C) |
| --- | --- |
| Example 1-1 | 96.34% |
| Example 1-2 | 96.16% |
| Example 1-3 | 96.39% |
| Example 2-1 | 95.99% |
| Example 2-2 | 95.94% |
| Example 2-3 | 95.77% |

(continued)

|  | Capacity Retention (30th cycle, 45°C) |
| --- | --- |
| Example 3-1 | 96.14% |
| Example 3-2 | 95.56% |
| Example 4-1 | 96.00% |
| Example 4-2 | 95.68% |
| Comparative Example 1 | 95.30% |

[Test Example 4: Capacity Retention (300th cycle) at High Temperature]

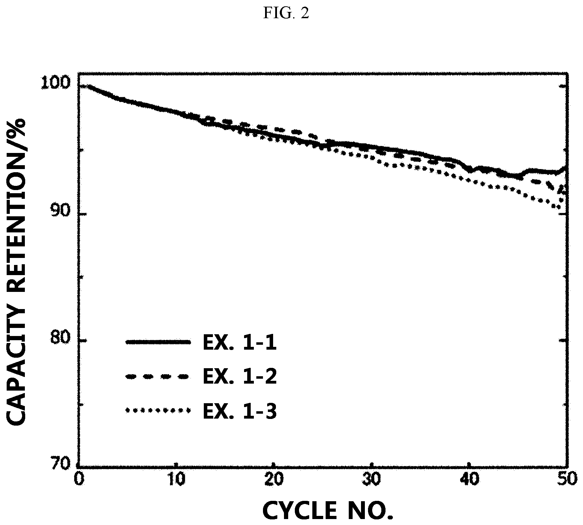

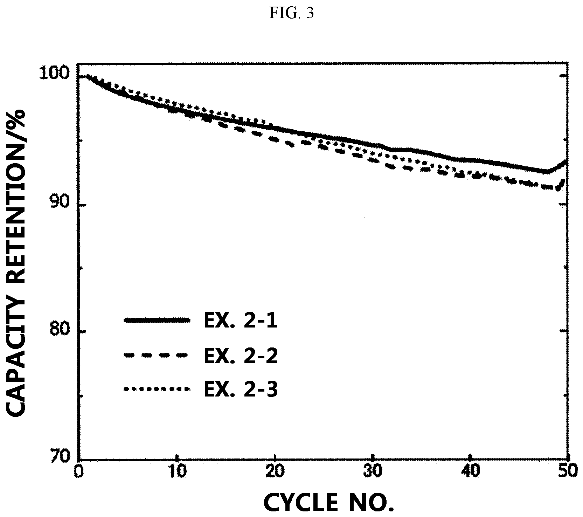

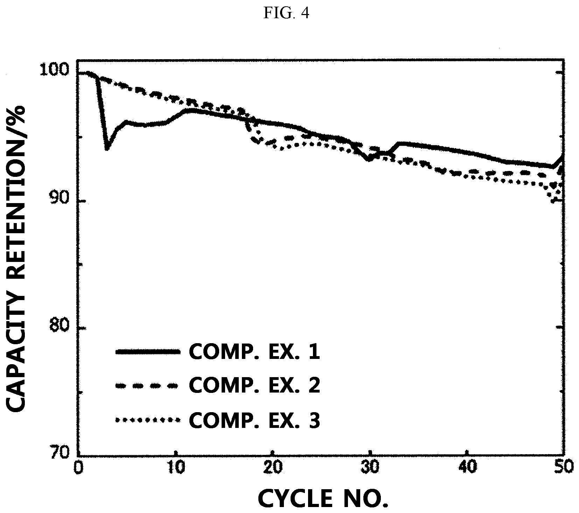

The mono-cell battery obtained according to each of Examples 1-1 to 1-3, 2-1 to 2-3 and Comparative Examples 1 to 3 was subjected to 300 charge/discharge cycles repeatedly in a thermostat maintained at 45°C under the conditions of a charge cutoff voltage of 4.25 V, discharge cutoff voltage of 2.50 V, charge current rate of 0.3 C and a discharge current rate of 0.3 C.
The above-defined capacity retention values were plotted as a function of the number of charge/discharge cycles. FIGS. 2-4 are graphs illustrating a change in battery capacity during the first to the 50th charge/discharge cycles. FIG. 2 is a graph illustrating such a change is battery capacity in Examples 1-1 to 1-3, FIG. 3 is a graph illustrating such a change is battery capacity in Examples 2-1 to 2-3, and FIG. 4 is a graph illustrating such a change is battery capacity in Comparative Examples 1 to 3. When comparing FIGS. 2-4 with one another, it can be seen that Comparative Examples 1 to 3 (FIG. 4) shows an unstable tendency in battery capacity during the first 30 cycles approximately, while Examples 1-1 to 1-3 (FIG. 2) and Examples 2-1 to 2-3 (FIG. 3) show a relatively smooth change in battery capacity. Although the present disclosure is not bound to the following mechanism, it is thought that gas generation occurs or chemical reaction occurs between the lithium transition metal oxide and the electrolyte due to the lithium intercalation/deintercalation in Comparative Examples 1 to 3, and thus the batteries show unstable charge/discharge characteristics. Particularly, it is known that there is a strong tendency of gas generation and unstable cycle operation in the case of a Ni-enriched positive electrode active material. On the contrary, it is thought that in the case of each example in which an iodine-containing starting material is added, Li conductivity is improved by the iodine-containing material during charge, and redox reaction of the positive electrode active material is accelerated, as described above, thereby inhibiting side reactions and an increase in resistance at the positive electrode, resulting in stable long-term cycles. It is also thought that since the surfaces of the active material particles are at least partially coated with the iodine-containing material, gas generation reaction between the active material and the electrolyte is inhibited to provide stable cycle characteristics.

[Test Example 5-1: Increase in Direct Current Resistance (DCR) after Repeating Charge/Discharge]

At the first and the 300th charge/discharge cycles in the charge/discharge repetition test according to Test Example 4, the mono-cell battery obtained according to each of Examples 1-1 to 1-3, 2-1 to 2-3 and Comparative Examples 1 to 3 was determined in terms of direct current resistance (DCR). Particularly, the DCR value was calculated by measuring the voltage value after fully charging the battery and right before the initiation of discharge for 40 seconds with a predetermined time interval to plot a discharge curve, approximating the curve into a linear graph, and calculating the gradient of the graph. Then, according to the following Mathematical Formula 2, an increase in DCR before and after 300 charge/discharge cycles was calculated from the calculated value.

Increase in DCR (%) = {(DCR at the 300th discharge process) / (DCR at the first discharge process)} X 100    [Mathematical Formula 2]

The obtained DCR increment values are shown in the following Table 4. Herein, the DCR increment values in Table 4 are relative values standardized by dividing the DCR increment value of each Example by the DCR increment value of Comparative Example 1. As compared to Comparative Examples 1 to 3, each Example shows a significantly smaller increase in DCR of battery.

[Test Example 5-2: Impedance after Repeating Charge/Discharge]

The mono-cell battery obtained according to each of Examples 1-1 to 1-3, 2-1 to 2-3 and Comparative Examples 1 to 3 was determined in terms of impedance by using an impedance analyzer, after completing charge at the 299th cycle in

the test of repetition of charge/discharge according to Test Example 4. The impedance ($\Omega$) of each positive electrode was calculated from the positive electrode impedance component appearing in the low-frequency side (100-0.01 Hz) of the resultant cole-cole plot.

The results of impedance values are shown in the following Table 4. Herein, the impedance values in Table 4 are relative values standardized by dividing the impedance value of each Example by the impedance value of Comparative Example 1. As compared to Comparative Example 1, each Examples shows a significantly smaller impedance value of positive electrode.

[Test Example 5-3: Change in Volume of Battery after Repeating Charge/Discharge]

The mono-cell battery obtained according to each of Examples 1-1 and 2-1 and Comparative Example 1 was determined in terms of volume by the Archimedes method, after completing the first charge process and after completing the 300th charge process in the test of repetition of charge/discharge according to Test Example 4. Then, a change in mono-cell volume after repeating 300 charge/discharge cycles was calculated according to the formula of (Volume of battery after completing the 300th charge process) - (Volume of battery after completing the first charge process).

The results of a change in battery volume are shown in the following Table 4. Herein, the values of change in volume in Table 4 are relative values standardized by dividing the value of change in volume of each Example by the value of change in volume of Comparative Example 1. All batteries show an increase in volume, but each of Examples shows a significantly smaller increase in volume as compared to Comparative Example 1.

[Table 4]

|  | Increase in DCR (relative value) | Impedance (relative value) | Change in battery volume (relative value) |
|---|---|---|---|
| Example 1-1 | 0.52 | 0.16 | 0.68 |
| Example 1-2 | 0.48 | 0.14 | - |
| Example 1-3 | 0.48 | 0.15 | - |
| Example 2-1 | 0.47 | 0.12 | 0.49 |
| Example 2-2 | 0.52 | 0.11 | - |
| Example 2-3 | 0.69 | 0.09 | - |
| Comparative Example 1 | 1 | 1 | 1 |
| Comparative Example 2 | 1.05 | - | - |
| Comparative Example 3 | 1.03 | - | - |

In general, an electrode or whole battery tends to show an increase in resistance due to the effect of byproducts, or the like, after repeating charge/discharge. The results of Test Example 5-1 show an increase in DCR of battery, and it can be seen from the results that each Example inhibits an increase in direct current resistance of the whole battery as compared to Comparative Examples. The results of Test Example 5-2 show the battery impedance at the 299th cycle, and it can be seen from the results that each Example shows a significantly smaller impedance of positive electrode and inhibits an increase in impedance significantly.

In addition, it is generally known that a battery tends to be swelled due to the effect of gases generated by side reactions, or the like, after repeating charge/discharge. The results of Test Example 5-3 show a change in battery volume, and it can be seen from the results that each Example shows a smaller change in battery volume and inhibits gas generation. Therefore, it is thought that Examples using an iodine-containing starting material inhibits side reactions as compared to Comparative Examples using no iodine-containing starting material.

[Test Example 6-1: Change in Volume of Battery before and after High-Temperature Storage]

The mono-cell battery obtained according to each of Examples 1-1 and 2-1 and Comparative Example 1 was determined in terms of volume of a fully charged battery by the Archimedes method, and then was stored in a thermostat maintained at 60°C for 2 weeks, and the volume of the mono-cell battery was measured again after taking it out of the thermostat. Then, a change in volume of each mono-cell battery was calculated according to the formula of (Volume of battery after high-temperature storage) - (Volume of battery volume before high-temperature storage).

The values of change in battery volume are shown in the following Table 5. Herein, the values of change in volume in Table 5 are relative values standardized by dividing the value of change in volume of each Example by the value of change in volume of Comparative Example 1. All batteries show an increase in volume, but each of Examples shows a significantly smaller increase in volume as compared to Comparative Example 1.

[Test Example 6-2: Residual Discharge Capacity Ratio after High-Temperature Storage]

The mono-cell battery obtained according to each of Examples 1-1 and 2-1 and Comparative Example 1 was determined in terms of discharge capacity right before storing it at high temperature as described above, and after taking it out of the high-temperature storage. Then, the residual discharge capacity ratio of each mono-cell battery was calculated according to the following Mathematical Formula 3:

Residual capacity ratio(%) = {(Discharge capacity right after high-temperature storage) / (Discharge capacity right before high-temperature storage)} X 100     [Mathematical Formula 3]

The results of residual capacity ratio are shown in the following Table 5. Herein, the residual discharge capacity ratio values in Table 5 are relative values standardized by dividing the residual discharge capacity ratio value of each Example by the residual discharge capacity value of Comparative Example 1. In all cases, the discharge capacity right after high-temperature storage is smaller than the discharge capacity right before high-temperature storage. However, Comparative Example 1 shows the smallest residual discharge capacity ratio, while each of Examples 1-1 and 2-1 shows a larger residual discharge capacity ratio as compared to Comparative Example 1. In other words, each Example inhibits deterioration of capacity characteristics caused by high-temperature storage, as compared to Comparative Example 1.

[Test Example 6-3: Restored Discharge Capacity Ratio after High-Temperature Storage]

The mono-cell battery obtained according to each of Examples 1-1 and 2-1 and Comparative Example 1 was taken out from the high-temperature storage, discharged once and charged again, and then was determined in terms of discharge capacity. Then, the restored discharge capacity ratio of each mono-cell battery after high-temperature storage was calculated according to the following Mathematical Formula 4:

Restored discharge capacity ratio (%) = {(Discharge capacity after high-temperature storage, discharge and recharge) / (Discharge capacity right before high-temperature storage)} X 100     [Mathematical Formula 4]

The results of restored discharge capacity ratio are shown in the following Table 5. Herein, the restored discharge capacity ratio values in Table 5 are relative values standardized by dividing the restored discharge capacity ratio value of each Example by the restored discharge capacity value of Comparative Example 1. In all cases, the discharge capacity after recharge is smaller than the discharge capacity right before high-temperature storage. However, Comparative Example 1 shows the smallest restored discharge capacity ratio, while each of Examples 1-1 and 2-1 shows a larger restored discharge capacity ratio as compared to Comparative Example 1. In other words, each Example inhibits deterioration of capacity characteristics caused by high-temperature, as compared to Comparative Example 1.

[Table 5]

| | Change in battery volume (relative value) | Residual discharge capacity right after storage at 60°C (relative value) | Restored discharge capacity right after storage at 60°C (relative value) |
|---|---|---|---|
| Example 1-1 | 0.60 | 1.14 | 1.05 |
| Example 2-1 | 0.40 | 1.15 | 1.06 |
| Comparative Example 1 | 1 | 1 | 1 |

It is thought that, in the case of Examples using the iodine-containing starting material, self-discharge at high temperature and deterioration of the active material in a charged state during high-temperature storage are inhibited by coating the lithium transition metal oxide with the iodine-containing material, and each battery is inhibited from swelling caused by high-temperature storage, as determined from an increase in residual capacity and restored capacity as compared to Comparative Example using no iodine-containing starting material.

[Reference Example 1]

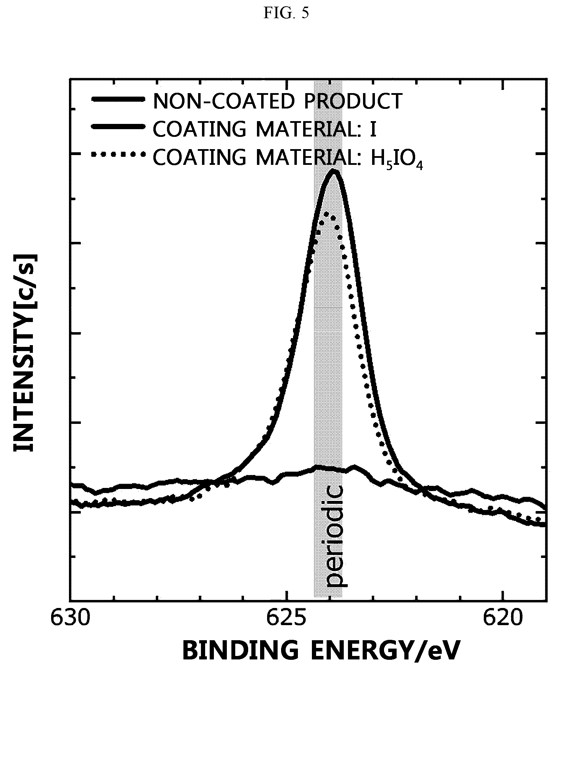

FIG. 5 illustrates the XPS spectrum of $I3d_{5/2}$ obtained by mixing orthoperiodic acid ($H_5IO_6$) as a coating material with a lithium transition metal oxide and firing the resultant mixture at 350°C for 5 hours. It can be seen from FIG. 5 that when using $H_5IO_6$ as an iodine-based coating material, the same spectrum as Example 1-1 using a simple substance of iodine as an iodine-based coating material is obtained. Meanwhile, orthoperiodic acid ($H_5IO_6$) is molten at 132°C and starts to be dehydrated to produce metaperiodic acid ($HIO_4$). In addition, iodine (V) oxide, such as $I_2O_4$ or $I_2O_5$, is decomposed into oxygen and iodine at 275°C or higher. It is thought from the above that, regardless of hydration of iodine in the coating material (i.e. even when using metaperiodic acid ($HIO_4$), $I_2O_4$ or $I_2O_5$ is used as a coating material), iodine, after mixing with a lithium transition metal oxide and firing, has the same oxidation state as Example 1-1 using a simple substance of iodine.

**Claims**

1.   A positive electrode active material for a lithium-ion secondary battery, comprising a lithium transition metal oxide, and an iodine-containing material at least partially covering the particles of the lithium transition metal oxide and containing iodine having an oxidation number of +3 to +7.

2.   The positive electrode active material for a lithium-ion secondary battery according to claim 1, wherein the iodine-containing material contains iodine having an oxidation number of +5 to +7.

3.   The positive electrode active material for a lithium-ion secondary battery according to claim 1 or 2, wherein the iodine-containing material contains iodine having an oxidation number of +7.

4.   The positive electrode active material for a lithium-ion secondary battery according to claim 1, wherein the iodine-containing material contains a periodate ion or a hydrogen periodate ion.

5.   The positive electrode active material for a lithium-ion secondary battery according to any one of claims 1 to 4, wherein the iodine-containing material contains a periodate ion $IO_4^-$.

6.   The positive electrode active material for a lithium-ion secondary battery according to claim 1, which shows a spectrum of $I3d_{5/2}$ having a peak at 622-626 eV, as determined by X-ray photoelectron spectroscopy.

7.   The positive electrode active material for a lithium-ion secondary battery according to claim 1, which comprises the iodine-containing material in an amount of 0.001-10.0 wt% based on the total weight of the positive electrode active material.

8.   A positive electrode active material slurry for a lithium-ion secondary battery comprising the positive electrode active material as defined in any one of claims 1 to 7.

9.   A positive electrode for a lithium-ion secondary battery, comprising a positive electrode active material layer, containing the positive electrode active material as defined in any one of claims 1 to 7 and formed on a current collector.

10.   A lithium-ion secondary battery comprising the positive electrode as defined in claim 9.

11.   A method for preparing the positive electrode active material for a lithium-ion secondary battery as defined in claim 1, the method comprising the steps of:

mixing a lithium transition metal oxide with an iodine-containing starting material in a solid state to prepare an iodine-containing mixture; and
firing the iodine-containing mixture,
wherein the firing step comprises firing the iodine-containing mixture at a firing temperature of 150-500°C, and
wherein the iodine-containing mixture is maintained at the firing temperature for a firing time of 1-12 hours, in the firing step.

12.   The method for preparing the positive electrode active material for a lithium-ion secondary battery according to claim 11, wherein the iodine-containing starting material comprises at least one selected from the group consisting of a simple substance of iodine, $I_2$; lithium iodide, LiI; sodium iodide, NaI; potassium iodide, KI; iodoform, $CHI_3$; carbon tetraiodide, $CI_4$; ammonium iodide, $NH_4I$; iodic acid, $HIO_3$; lithium iodate, $LiIO_3$; sodium iodate, $NaIO_3$; potassium iodate, $KIO_3$; ammonium iodate, $NH_4IO_3$; metaperiodic acid, $HIO_4$; orthoperiodic acid, $H_5IO_6$; lithium periodate, $LiIO_4$; sodium periodate, $NaIO_4$; potassium periodate, $KIO_4$; iodine oxide (IV), $I_2O_4$; iodine oxide (V), $I_2O_5$; and iodine oxide (IV, V), $I_4O_9$.

13. The method for preparing the positive electrode active material for a lithium-ion secondary battery according to claim 11 or 12, wherein the iodine-containing starting material comprises a simple substance of iodine, $I_2$.

14. The method for preparing the positive electrode active material for a lithium-ion secondary battery according to claim 11, wherein the iodine-containing starting material is mixed with the lithium transition metal oxide in an amount of 0.01-5 wt% based on the weight of the lithium transition metal oxide.

15. The method for preparing the positive electrode active material for a lithium-ion secondary battery according to claim 11, wherein the firing step is carried out under ambient atmosphere.


## Patentansprüche

1. Positivelektrodenaktivmaterial für eine Lithium-Ionen-Sekundärbatterie, umfassend ein Lithium-Übergangsmetalloxid und ein Iod-haltiges Material, das die Partikel des Lithium-Übergangsmetalloxids zumindest teilweise bedeckt und Iod mit einer Oxidationszahl von +3 bis +7 enthält.

2. Positivelektrodenaktivmaterial für eine Lithium-Ionen-Sekundärbatterie gemäß Anspruch 1, wobei das Iod-haltige Material Iod mit einer Oxidationszahl von +5 bis +7 enthält.

3. Positivelektrodenaktivmaterial für eine Lithium-Ionen-Sekundärbatterie gemäß Anspruch 1 oder 2, wobei das Iod-haltige Material Iod mit einer Oxidationszahl von +7 enthält.

4. Positivelektrodenaktivmaterial für eine Lithium-Ionen-Sekundärbatterie gemäß Anspruch 1, wobei das Iod-haltige Material ein Periodat-Ion oder ein Wasserstoffperiodat-Ion enthält.

5. Positivelektrodenaktivmaterial für eine Lithium-Ionen-Sekundärbatterie gemäß mindestens einem der Ansprüche 1 bis 4, wobei das Iod-haltige Material ein Periodat-Ion $IO_4^-$ enthält.

6. Positivelektrodenaktivmaterial für eine Lithium-Ionen-Sekundärbatterie gemäß Anspruch 1, das ein $I3d_{5/2}$-Spektrum mit einem Peak bei 622-626 eV aufweist, bestimmt durch Röntgen-Photoelektronenspektroskopie.

7. Positivelektrodenaktivmaterial für eine Lithium-Ionen-Sekundärbatterie gemäß Anspruch 1, das das Iod-haltige Material in einer Menge von 0,001 bis 10,0 Gew.-%, bezogen auf das Gesamtgewicht des Positivelektrodenaktivmaterials, umfasst.

8. Positivelektrodenaktivmaterialaufschlämmung für eine Lithium-Ionen-Sekundärbatterie, die das in mindestens einem der Ansprüche 1 bis 7 definierte Positivelektrodenaktivmaterial umfasst.

9. Positive Elektrode für eine Lithium-Ionen-Sekundärbatterie, die eine Positivelektrodenaktivmaterialschicht umfasst, welche das in mindestens einem der Ansprüche 1 bis 7 definierte Positivelektrodenaktivmaterial enthält und auf einem Stromkollektor ausgebildet ist.

10. Lithium-Ionen-Sekundärbatterie, die die in Anspruch 9 definierte positive Elektrode umfasst.

11. Verfahren zur Herstellung des in Anspruch 1 definierten Positivelektrodenaktivmaterials für eine Lithium-Ionen-Sekundärbatterie, wobei das Verfahren die folgenden Schritte umfasst:

Mischen eines Lithium-Übergangsmetalloxids mit einem Iod-haltigen Ausgangsmaterial im festen Zustand, um eine Iod-haltige Mischung herzustellen; und
Brennen der Iod-haltigen Mischung,
wobei der Brennschritt das Brennen der Iod-haltigen Mischung bei einer Brenntemperatur von 150-500 °C umfasst, und wobei die Iod-haltige Mischung im Brennschritt für eine Brenndauer von 1-12 Stunden auf der Brenntemperatur gehalten wird.

12. Verfahren zur Herstellung des Positivelektrodenaktivmaterials für eine Lithium-Ionen-Sekundärbatterie gemäß Anspruch 11, wobei das Iod-haltige Ausgangsmaterial mindestens eine Verbindung umfasst, ausgewählt aus der Gruppe bestehend aus einer reinen Iodverbindung, $I_2$; Lithiumiodid, LiI; Natriumiodid, NaI; Kaliumiodid, KI; Iodoform, $CHI_3$; Tetraiodkohlenstoff, $CI_4$; Ammoniumiodid, $NH_4I$; Iodsäure, $HIO_3$; Lithiumiodat, $LiIO_3$; Natriumiodat, $NaIO_3$; Kaliumiodat, $KIO_3$; Ammoniumiodat, $NH_4IO_3$; Metaperiodsäure, $HIO_4$; Orthoperiodsäure, $H_5IO_6$; Lithiumperiodat, $LiIO_4$; Natriumperiodat, $NaIO_4$; Kaliumperiodat, $KIO_4$; Iodoxid (IV), $I_2O_4$; Iodoxid (V), $I_2O_5$; und Iodoxid (IV, V), $I_4O_9$.

13. Verfahren zur Herstellung des Positivelektrodenaktivmaterials für eine Lithium-Ionen-Sekundärbatterie gemäß Anspruch 11 oder 12, wobei das Iod-haltige Ausgangsmaterial eine einfache Iodverbindung, $I_2$, umfasst.

14. Verfahren zur Herstellung des Positivelektrodenaktivmaterials für eine Lithium-Ionen-Sekundärbatterie gemäß Anspruch 11, wobei das Iod-haltige Ausgangsmaterial mit dem Lithium-Übergangsmetalloxid in einer Menge von 0,01-5 Gew.-%, bezogen auf das Gewicht des Lithium-Übergangsmetalloxids, gemischt wird.

15. Verfahren zur Herstellung des Positivelektrodenaktivmaterials für eine Lithium-Ionen-Sekundärbatterie gemäß Anspruch 11, wobei der Brennschritt unter Umgebungsatmosphäre durchgeführt wird.

**Revendications**

1. Matériau actif d'électrode positive pour une batterie rechargeable au lithium-ion, comprenant un oxyde de métal de transition lithié, et un matériau contenant de l'iode recouvrant au moins partiellement les particules de l'oxyde de métal de transition lithié et contenant de l'iode présentant un nombre d'oxydation de +3 à +7.

2. Matériau actif d'électrode positive pour une batterie rechargeable au lithium-ion selon la revendication 1, dans lequel le matériau contenant de l'iode contient de l'iode présentant un nombre d'oxydation de +5 à +7.

3. Matériau actif d'électrode positive pour une batterie rechargeable au lithium-ion selon la revendication 1 ou la revendication 2, dans lequel le matériau contenant de l'iode contient de l'iode présentant un nombre d'oxydation de +7.

4. Matériau actif d'électrode positive pour une batterie rechargeable au lithium-ion selon la revendication 1, dans lequel le matériau contenant de l'iode contient un ion périodate ou un ion hydrogénopériodate.

5. Matériau actif d'électrode positive pour une batterie rechargeable au lithium-ion selon l'une quelconque des revendications 1 à 4, dans lequel le matériau contenant de l'iode contient un ion périodate $IO_4^-$.

6. Matériau actif d'électrode positive pour une batterie rechargeable au lithium-ion selon la revendication 1, qui possède un spectre de $I3d_{5/2}$ présentant un pic à 622-626 eV, tel que déterminé par spectroscopie photoélectronique à rayons X.

7. Matériau actif d'électrode positive pour une batterie rechargeable au lithium-ion selon la revendication 1, qui comprend le matériau contenant de l'iode en une quantité de 0,001-10,0 %pds sur la base du poids total du matériau actif d'électrode positive.

8. Suspension de matériau actif d'électrode positive pour une batterie rechargeable au lithium-ion comprenant le matériau actif d'électrode positive tel que défini dans l'une quelconque des revendications 1 à 7.

9. Électrode positive pour une batterie rechargeable au lithium-ion, comprenant une couche de matériau actif d'électrode positive, contenant le matériau actif d'électrode positive tel que défini dans l'une quelconque des revendications 1 à 7 et formée sur un collecteur de courant.

10. Batterie rechargeable au lithium-ion comprenant l'électrode positive telle que définie dans la revendication 9.

11. Procédé de préparation du matériau actif d'électrode positive pour une batterie rechargeable au lithium-ion tel que défini dans la revendication 1, le procédé comprenant les étapes de :

mélange d'un oxyde de métal de transition lithié avec un matériau de départ contenant de l'iode dans un état solide pour préparer un mélange contenant de l'iode ; et
cuisson du mélange contenant de l'iode,
dans lequel l'étape de cuisson comprend la cuisson du mélange contenant de l'iode à une température de cuisson de 150-500 °C, et dans lequel le mélange contenant de l'iode est maintenu à la température de cuisson pendant un temps de cuisson de 1-12 h, dans l'étape de cuisson.

12. Procédé de préparation du matériau actif d'électrode positive pour une batterie rechargeable au lithium-ion selon la revendication 11, dans lequel le matériau de départ contenant de l'iode comprend au moins l'un ou l'une sélectionnée dans le groupe consistant en une substance simple d'iode, $I_2$ ; l'iodure de lithium, LiI ; l'iodure de sodium, NaI ; l'iodure de potassium, KI ; l'iodoforme, $CHI_3$ ; le tétraiodure de carbone, $CI_4$ ; l'iodure d'ammonium, $NH_4I$ ; l'acide iodique, $HIO_3$ ; l'iodate de lithium, $LiIO_3$ ; l'iodate de sodium, $NaIO_3$ ; l'iodate de potassium, $KIO_4$ ; l'iodate d'ammonium, $NH_4IO_3$ ; l'acide métapériodique, $HIO_4$ ; l'acide orthopériodique, $H_5IO_5$ ; le périodate de lithium, $LiIO_4$ ; le périodate de sodium, $NaIO_4$ ; le périodate de potassium, $KIO_4$ ; l'oxyde d'iode (IV), $I_2O_4$ ; l'oxyde d'iode (V), $I_2O_5$ ; et l'oxyde d'iode (IV, V), $I_4O_9$.

13. Procédé de préparation du matériau actif d'électrode positive pour une batterie rechargeable au lithium-ion selon la revendication 11 ou la revendication 12, dans lequel le matériau de départ contenant de l'iode comprend une substance simple d'iode, $I_2$.

14. Procédé de préparation du matériau actif d'électrode positive pour une batterie rechargeable au lithium-ion selon la revendication 11, dans lequel le matériau de départ contenant de l'iode est mélangé avec l'oxyde de métal de transition lithié en une quantité de 0,01-5 %pds sur la base du poids de l'oxyde de métal de transition lithié.

15. Procédé de préparation du matériau actif d'électrode positive pour une batterie rechargeable au lithium-ion selon la revendication 11, dans lequel l'étape de cuisson est réalisée sous atmosphère ambiante.

FIG. 1

FIG. 2

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20180071438 A
- JP 2017084673 A
- JP 2009016302 A
- JP 2017183101 A
- JP 2018516458 A
- JP 2013543219 A